# FASCICULE DE BREVET EUROPEEN

(11) **EP 4 078 783 B1**
(45) Date de publication et mention de la délivrance du brevet: **13.03.2024**
(21) Numéro de dépôt: 20821293.6
(22) Date de dépôt: 15.12.2020
(51) Int. Cl.: H02K 5/20, H02K 9/19

(54) **MACHINE ÉLECTRIQUE TOURNANTE REFROIDIE**
GEKÜHLTE ROTIERENDE ELEKTRISCHE MASCHINE
COOLED ROTARY ELECTRIC MACHINE

(30) Priorité: 19.12.2019 FR 1914907
(43) Date de publication de la demande: 26.10.2022
(73) Titulaire: VALEO EQUIPEMENTS ELECTRIQUES MOTEUR, 94046 Créteil Cedex (FR)
(72) Inventeur: HUSSON, Pierrick, 94046 CRETEIL CEDEX (FR); RIVALS, Alexis, 94046 CRETEIL CEDEX (FR)
(74) Mandataire: Valeo Powertrain Systems
(86) Numéro de dépôt international: PCT/EP2020/086225
(87) Numéro de publication internationale: WO 2021/122601

(56) Documents cités:
- CN-A- 110 417 190
- DE-A1-102007 009 394
- DE-A1-102013 213 433
- DE-A1-102015 213 479
- US-A- 2 862 120

## Description

L'invention porte sur un système de refroidissement pour machine électrique tournante et une machine électrique tournante équipée d'un tel système.

Il est connu de la demande de brevet DE102013213433 un système de refroidissement pour machine électrique tournante ayant un axe de rotation comprenant :
- une enveloppe de refroidissement apte à recevoir un stator de la machine électrique tournante,
- un boitier recevant l'enveloppe de refroidissement,

dans lequel une paroi extérieure de l'enveloppe de refroidissement forme avec une paroi intérieure du boitier une chambre de refroidissement apte à être parcourue par un fluide de refroidissement,
et dans lequel le boitier comprend une ouverture d'entrée pour l'entrée du fluide de refroidissement dans une zone d'entrée de la chambre de refroidissement et une ouverture de sortie pour la sortie du fluide de refroidissement d'une zone de sortie de la chambre de refroidissement, l'ouverture d'entrée et l'ouverture de sortie étant formées dans le boitier,
et dans lequel un élément séparateur, distinct de l'enveloppe de refroidissement et du boitier, est fixé sur l'une des paroi extérieure de l'enveloppe de refroidissement et paroi intérieure du boitier pour séparer la zone d'entrée de la chambre de refroidissement et la zone de sortie de la chambre de refroidissement.

Un tel élément séparateur est cependant difficile à fixer sur l'enveloppe de refroidissement. Un usinage complexe et coûteux peut être nécessaire pour adapter l'élément séparateur à l'enveloppe de refroidissement. De plus un tel élément séparateur n'est pas adapté à une chambre de refroidissement qui présente une forme de révolution ayant pour axe l'axe de rotation et dont la forme de révolution a une première épaisseur mesurée à une première extrémité axiale et une deuxième épaisseur mesurée à une deuxième extrémité axiale, la première épaisseur étant inférieure à la deuxième épaisseur. En effet ce type de chambre de refroidissement peut présenter une épaisseur très faible, voire nulle à une de ses extrémités. Il est difficile d'adapter l'épaisseur de l'élément séparateur à cette épaisseur très faible. Cette inadaptation peut entraîner une circulation de fluide de refroidissement trop importante entre la zone d'entrée de la chambre de refroidissement et la zone de sortie de la chambre de refroidissement. Une telle circulation trop importante autour de l'élément séparateur peut réduire la capacité de refroidissement du système de refroidissement.

La présente invention vise à supprimer tout ou partie de ces inconvénients.

L'invention porte sur un système de refroidissement pour machine électrique tournante ayant un axe de rotation comprenant :
- une enveloppe de refroidissement apte à recevoir un stator de la machine électrique tournante,
- un boitier recevant l'enveloppe de refroidissement,

dans lequel une paroi extérieure de l'enveloppe de refroidissement forme avec une paroi intérieure du boitier une chambre de refroidissement apte à être parcourue par un fluide de refroidissement,
et dans lequel le boitier comprend une ouverture d'entrée pour l'entrée du fluide de refroidissement dans une zone d'entrée de la chambre de refroidissement et une ouverture de sortie pour la sortie du fluide de refroidissement d'une zone de sortie de la chambre de refroidissement, l'ouverture d'entrée et l'ouverture de sortie étant formées dans le boitier,
et dans lequel un élément séparateur, distinct de l'enveloppe de refroidissement et du boitier, est fixé sur l'une des paroi extérieure de l'enveloppe de refroidissement et paroi intérieure du boitier pour séparer la zone d'entrée de la chambre de refroidissement et la zone de sortie de la chambre de refroidissement,
l'élément séparateur comprenant :
   - une partie de fixation, d'une première longueur, comportant une face de fixation d'une forme complémentaire à la forme de celle des paroi extérieure de l'enveloppe de refroidissement et paroi intérieure du boitier sur laquelle l'élément séparateur est fixé,
   - une première partie de séparation, d'une deuxième longueur, inclinée par rapport à la partie de fixation et non parallèle à la partie de fixation,
la première longueur étant inférieure à la deuxième longueur de manière à ce que la première partie de séparation comprend une première extrémité libre qui n'est pas directement liée à la partie de fixation. L'utilisation d'un élément séparateur qui est distinct de l'enveloppe de refroidissement et du boitier permet de simplifier la fabrication de l'enveloppe de refroidissement et du boitier et donc réduire le coût de fabrication du système de refroidissement et de la machine dans laquelle il est utilisé. En effet celle des paroi extérieure de l'enveloppe de refroidissement et paroi intérieure du boitier sur laquelle l'élément séparateur est fixé peut avoir une forme cylindrique facilement réalisable.

De plus l'utilisation d'un élément séparateur dont la partie de fixation est plus courte que la partie de séparation permet une meilleure séparation entre la zone d'entrée de la chambre de refroidissement et la zone de sortie de la chambre de refroidissement. En effet la première extrémité n'étant pas limité par les contraintes de fabrication de la partie de fixation, il est possible de réaliser une extrémité libre dont la forme est proche de la forme de la chambre de refroidissement. Les possibilités de passage du fluide de refroidissement autour de l'élément de séparation sont réduites et le refroidissement de la machine électrique tournante est ainsi amélioré.

Selon une caractéristique supplémentaire de l'invention, la première partie de séparation forme un angle compris entre 20 degrés et 160 degrés, notamment entre 45 degrés et 135 degrés, avec la partie de fixation.

Selon une caractéristique supplémentaire de l'invention, la première partie de séparation est formée en continuité de matière avec la partie de fixation au-delà d'une première zone de pliage.

La réalisation d'un élément séparateur dont la première partie de séparation et la partie de fixation sont formées en continuité de matière et séparé par une zone pliée permet de réduire le coût de fabrication de l'élément séparateur.

Selon une caractéristique supplémentaire de l'invention, la chambre de refroidissement présente une forme de révolution ayant pour axe l'axe de rotation, la forme de révolution ayant une première épaisseur mesurée à une première extrémité axiale et une deuxième épaisseur mesurée à une deuxième extrémité axiale, la première épaisseur étant inférieure à la deuxième épaisseur, et la première extrémité libre est orientée du côté de la première extrémité axiale, une autre extrémité de la première partie de séparation opposée à l'extrémité libre étant orienté du côté de la deuxième extrémité axiale. L'utilisation d'une chambre de refroidissement de révolution dont l'épaisseur à une première extrémité est inférieure à l'épaisseur à une deuxième extrémité permet l'utilisation d'un boitier et/ou d'une enveloppe de refroidissement dont le procédé de fabrication, notamment la fonderie et l'emboutissage, nécessite la présence de dépouille sur les pièces. L'extrémité libre de l'élément séparateur pouvant avoir une épaisseur radiale faible, il est possible de séparer la zone d'entrée de la chambre de refroidissement et la zone de sortie de la chambre de refroidissement même dans les zones où la chambre de refroidissement est la moins épaisse.

Selon une caractéristique supplémentaire de l'invention, l'élément séparateur est réalisé à partir d'un matériau en feuille notamment en tôle d'acier.

L'utilisation d'un matériau en feuille permet de simplifier la fabrication de l'élément séparateur et donc réduire le coût de fabrication de la machine électrique.

Selon une caractéristique supplémentaire de l'invention, une surface de bord du matériau en feuille de la première extrémité libre fait face à l'une parmi : la paroi extérieure de l'enveloppe de refroidissement et la paroi intérieure du boitier sur laquelle est fixé l'élément séparateur.

Une telle caractéristique permet d'adapter la forme de la première extrémité libre à la forme de la chambre. Il est ainsi possible d'améliorer la séparation entre la zone d'entrée de la chambre de refroidissement et la zone de sortie de la chambre de refroidissement.

Selon une caractéristique supplémentaire de l'invention, l'élément séparateur comprend une deuxième partie de séparation, d'une troisième longueur, inclinée par rapport à la face partie de fixation et non parallèle à la face partie de fixation, la première longueur étant inférieure à la troisième longueur de manière à ce que la deuxième partie de séparation comprend une deuxième extrémité libre qui n'est pas directement liée à la partie de fixation.

L'utilisation d'un élément séparateur comprenant une deuxième partie de séparation en plus de la première partie de séparation permet d'améliorer encore la séparation entre la zone d'entrée de la chambre de refroidissement et la zone de sortie de la chambre de refroidissement et donc améliorer les performances de refroidissement du système de refroidissement. Cette amélioration de performances ne nécessitant pas l'utilisation de pièces supplémentaire, elle a un coût réduit.

Selon une caractéristique supplémentaire de l'invention, la deuxième partie de séparation est formée en continuité de matière avec la partie de fixation au-delà d'une deuxième zone de pliage.

Selon une caractéristique supplémentaire de l'invention, l'élément séparateur est soudé sur l'une des parois extérieures de l'enveloppe de refroidissement et paroi intérieure du boitier.

L'invention porte également sur une machine électrique comprenant :
- un stator,
- un rotor,
- un système de refroidissement tel que décrit précédemment.

Selon une caractéristique supplémentaire de l'invention, le stator est monté en force dans l'enveloppe de refroidissement.

Dans tout ce qui précède, le rotor peut être un rotor à griffes. Ce rotor comprend alors une première et une deuxième roues polaires imbriquées, la première roue polaire définissant une série de griffes de forme globalement trapézoïdale, chaque griffe s'étendant axialement en direction de la deuxième roue polaire, la deuxième roue polaire définissant une série de griffes de forme globalement trapézoïdale, chaque griffe s'étendant axialement en direction de la première roue polaire. Un aimant permanent peut être reçu entre deux griffes consécutives circonférentiellement parlant pour le rotor. En variante, le rotor peut être autre qu'un rotor à griffes, comprenant par exemple un paquet de tôles.

Dans tout ce qui précède, le rotor peut comprendre un nombre de paires de pôles quelconque, par exemple six ou huit paires de pôles.

Dans tout ce qui précède, la machine électrique tournante peut avoir un stator ayant un enroulement électrique polyphasé, par exemple formé par des fils ou par des barres conductrices reliées les unes les autres.

La machine électrique tournante peut comprendre un composant électronique de puissance, apte à être connecté au réseau de bord du véhicule. Ce composant électronique de puissance comprend par exemple un onduleur/redresseur permettant, selon que la machine électrique fonctionne en moteur ou en génératrice, de charger un réseau de bord du véhicule ou d'être électriquement alimenté depuis ce réseau. La machine électrique tournante peut encore comprendre une poulie ou tout autre moyen de liaison vers le reste du groupe motopropulseur du véhicule. La machine électrique est par exemple reliée, notamment via une courroie, au vilebrequin du moteur thermique du véhicule. En variante, la machine électrique est reliée à d'autres emplacement du groupe motopropulseur, par exemple à l'entrée de la boîte de vitesses du point de vue du couple transitant vers les roues du véhicule, en sortie de la boîte de vitesses du point de vue du couple transitant vers les roues du véhicule, au niveau de la boîte de vitesses du point de vue du couple transitant vers les roues du véhicule, ou encore sur le train avant ou le train arrière de ce groupe motopropulseur.

La machine électrique tournante n'est pas nécessairement une machine synchrone, pouvant être une machine asynchrone.

L'invention pourra être mieux comprise à la lecture de la description qui va suivre d'exemples non limitatifs de mise en oeuvre de celle-ci et à l'examen du dessin annexé sur lequel :
- la figure 1 représente une vue partielle d'une machine électrique tournante comprenant un système de refroidissement selon l'invention,
- la figure 2 représente une vue partielle en coupe du système de refroidissement de la machine électrique tournante de la figure 1 selon un premier mode de réalisation,
- la figure 3 représente une autre vue partielle en coupe du système de refroidissement de la machine électrique tournante de la figure 1 selon le premier mode de réalisation,
- la figure 4 représente une autre vue partielle en coupe du système de refroidissement de la machine électrique tournante de la figure 1 selon le premier mode de réalisation,
- la figure 5 représente une vue partielle du système de refroidissement de la machine électrique tournante de la figure 1 selon le premier mode de réalisation,
- la figure 6 représente une vue d'un élément séparateur du système de refroidissement de la machine électrique tournante de la figure 1 selon le premier mode de réalisation,
- la figure 7 représente une vue d'un élément séparateur du système de refroidissement de la machine électrique tournante de la figure 1 selon un deuxième mode de réalisation.

Sur toutes les figures, les éléments identiques ou assurant la même fonction portent les mêmes numéros de référence. Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

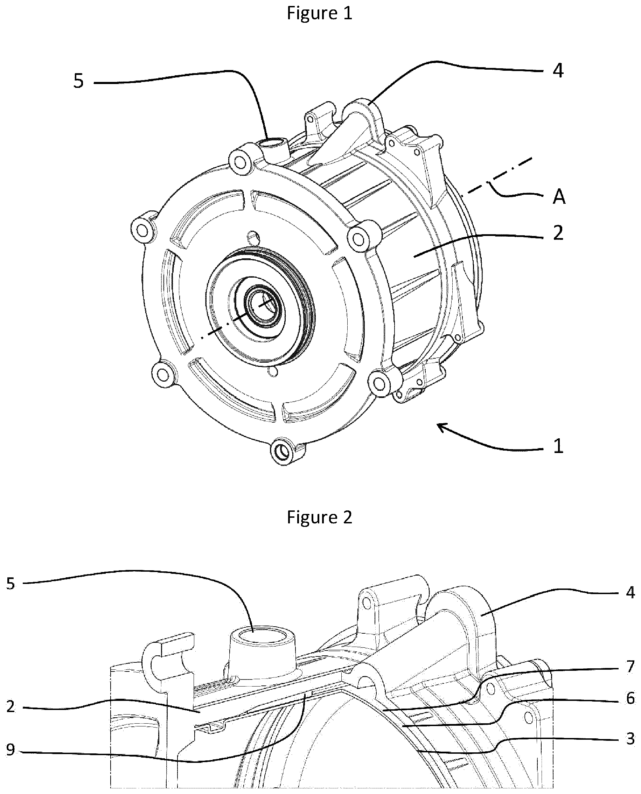

La figure 1 et la figure 2 représentent des vues partielles d'une machine électrique tournante d'axe de rotation A comprenant un stator, un rotor et un système de refroidissement selon l'invention.

Pour des raisons de lisibilité des figures, certains éléments de la machine électrique tournante n'ont pas été représentés sur les figures. En particulier le rotor et le stator n'ont pas été représentés.

Le système de refroidissement comprend :
- une enveloppe de refroidissement 3 apte à recevoir un stator de la machine électrique tournante 1,
- un boitier 2 recevant l'enveloppe de refroidissement.

L'enveloppe de refroidissement est par exemple un manchon cylindrique en acier.

Le stator est par exemple monté en force dans l'enveloppe de refroidissement 3.

Une paroi extérieure 11 de l'enveloppe de refroidissement 3 forme avec une paroi intérieure 10 du boitier une chambre de refroidissement 6.

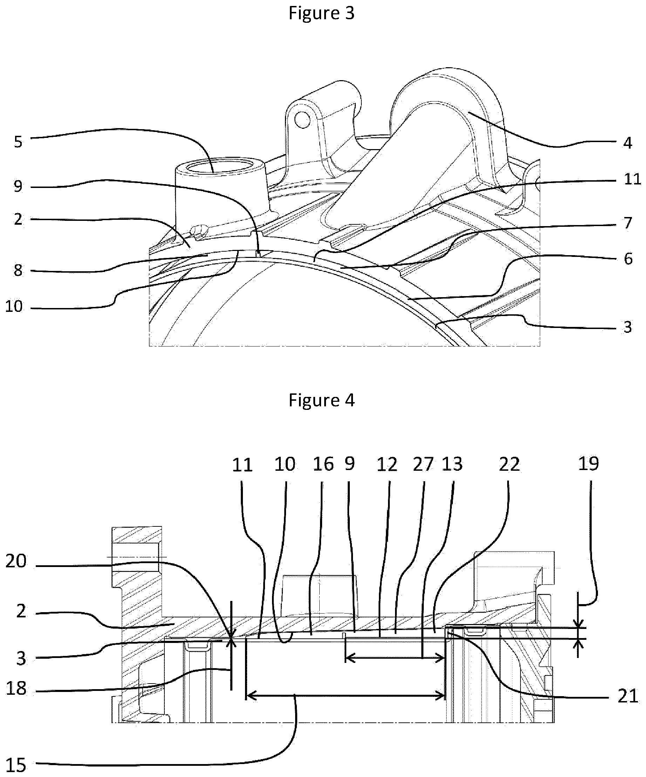

La figure 3 représente une vue partielle de la machine électrique tournante comprenant le système de refroidissement selon l'invention. Une coupe permet de visualiser la chambre de refroidissement.

Un fluide de refroidissement circule dans la chambre de refroidissement 6. Le boitier comprend une ouverture d'entrée 4 pour l'entrée du fluide de refroidissement dans une zone d'entrée 7 de la chambre de refroidissement 6 et une ouverture de sortie 5 pour la sortie du fluide de refroidissement d'une zone de sortie 8 de la chambre de refroidissement 6.

L'ouverture d'entrée 4 et l'ouverture de sortie 5 sont formées dans le boitier 2. Dans les modes de réalisation représentés sur les figures, des cheminées formées en continuité de matière avec le boitier permettent l'arrivée jusqu'à l'ouverture d'entrée 4 et la sortie du fluide après l'ouverture de sortie 5. Dans un autre mode de réalisation de l'invention, les cheminées sont des pièces rapportées, par exemple des tubes emmanchés à force dans l'ouverture d'entrée 4 et l'ouverture de sortie 5.

Le système de refroidissement comprend en outre un élément séparateur 9, distinct de l'enveloppe de refroidissement 3 et du boitier 2. L'élément séparateur 9 est fixé sur l'une des paroi extérieure 11 de l'enveloppe de refroidissement 3 et paroi intérieure 10 du boitier 2. L'élément séparateur 9 permet de séparer la zone d'entrée 7 de la chambre de refroidissement 6 et la zone de sortie 8 de la chambre de refroidissement 6.

Cette séparation entre la zone d'entrée 7 de la chambre de refroidissement 6 et la zone de sortie 8 de la chambre de refroidissement 6 permet d'éviter qu'une trop grande quantité de fluide de refroidissement circule par le chemin le plus court entre l'ouverture d'entrée 4 à l'ouverture de sortie 5. La séparation permet de favoriser la circulation du fluide dans la chambre de refroidissement par le chemin le plus long de manière à améliorer les échanges thermiques entre le fluide de refroidissement et l'enveloppe de refroidissement 3 qui est en contact thermique avec le stator.

La figure 4 représente l'élément séparateur 9 dans son environnement.

L'élément séparateur 9 comprend :
- une partie de fixation 12, d'une première longueur 13, comportant une face de fixation d'une forme complémentaire à la forme de celle des paroi extérieure 11 de l'enveloppe de refroidissement 3 et paroi intérieure 10 du boitier 2 sur laquelle l'élément séparateur 9 est fixé,
- une première partie de séparation 14, d'une deuxième longueur 15, inclinée par rapport à la partie de fixation 12 et non parallèle à la partie de fixation 12.

La première longueur 13 est inférieure à la deuxième longueur 15 de manière à ce que la première partie de séparation 14 comprend une première extrémité libre 16 qui n'est pas directement liée à la partie de fixation 12.

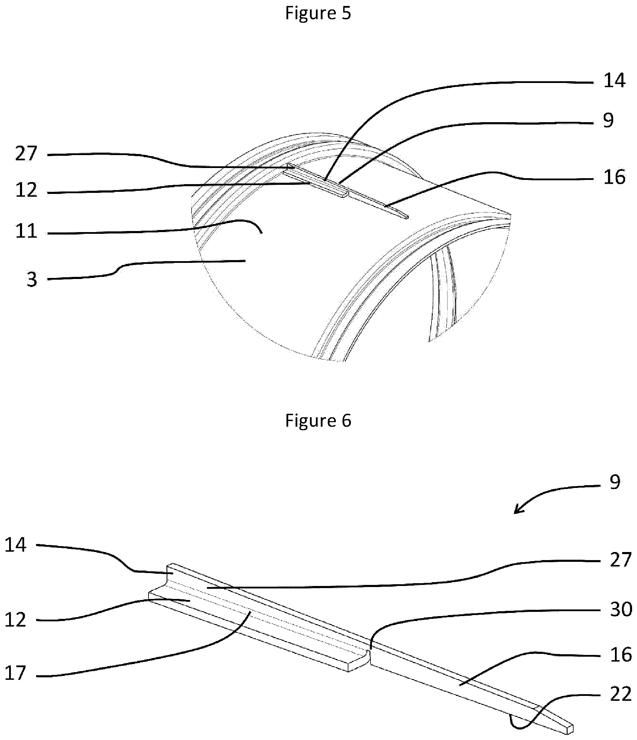

La figure 6 représente l'élément séparateur 9 du système de refroidissement selon un premier mode réalisation.

La partie de fixation 12 est donc plus courte que la première partie de séparation 14. La première partie de séparation 14 comprend en outre une première partie intermédiaire 27 qui est directement liée à la partie de fixation 12. La première extrémité libre 16 est directement liée à la première partie intermédiaire 27. La première partie intermédiaire 27 assure donc la liaison entre la partie de fixation 12 et la première extrémité libre 16.

La première partie de séparation 14 est par exemple formée en continuité de matière avec la partie de fixation 12 au-delà d'une première zone de pliage 17. La première zone de pliage 17 assure donc la liaison directe entre la partie de fixation 12 et la première partie intermédiaire 27 de la première partie de séparation 14.

La première partie de séparation 14, peut former un angle compris entre 20 degrés et 160 degrés, notamment entre 45 degrés et 135 degrés, avec la partie de fixation 12.

Dans les modes de réalisation de l'invention représentés sur les figures, la première partie de séparation 14 forme un angle de 90 degrés avec la partie de fixation 12.

La chambre de refroidissement 6 présente par exemple une forme de révolution ayant pour axe l'axe de rotation A. La forme de révolution a une première épaisseur 18 mesurée à une première extrémité axiale 20 et une deuxième épaisseur 19 mesurée à une deuxième extrémité axiale 21. La première épaisseur 18 est inférieure à la deuxième épaisseur 19. La première extrémité libre 16 est orientée du côté de la première extrémité axiale 20. Une autre extrémité 22 de la première partie de séparation 14 opposée à l'extrémité libre 16 est orienté du côté de la deuxième extrémité axiale 21. L'autre extrémité peut faire partie de la première partie intermédiaire 27.

L'élément séparateur 9 est par exemple réalisé à partir d'un matériau en feuille notamment en tôle d'acier.

La partie de fixation 12 de l'élément séparateur 9 est par exemple soudée sur celle de la paroi extérieure 11 de l'enveloppe de refroidissement 3 et la paroi intérieure 10 du boitier 2 sur laquelle est fixé l'élément séparateur 9. Dans les modes de réalisation représentés sur les figures la partie de fixation 12 est soudée sur la paroi extérieure 11 de l'enveloppe de refroidissement 3. La figure 5 représente l'élément séparateur 9 du premier mode de réalisation du système de refroidissement, soudé sur la paroi extérieure 11 de l'enveloppe de refroidissement.

Dans d'autres modes de réalisation de l'invention d'autres types de fixation peuvent être utilisés notamment le collage, le brasage ou le clinchage.

Une surface de bord 22 du matériau en feuille de la première extrémité libre 16 peut faire face à l'une parmi : la paroi extérieure 11 de l'enveloppe de refroidissement 3 et la paroi intérieure 10 du boitier 2 sur laquelle est fixé l'élément séparateur 9. L'élément séparateur 9 est par exemple découpé à la presse ou découpé par découpage LASER. La surface de bord 22 fait partie de la surface découpée du matériau en feuille.

La surface de bord 22 peut être en contact avec celle de la paroi extérieure 11 de l'enveloppe de refroidissement 3 et la paroi intérieure 10 du boitier 2 sur laquelle est fixé l'élément séparateur 9. Pour faciliter le pliage et éviter une déchirure du matériau en feuille lors du pliage entre la première partie de séparation 14 et la première partie intermédiaire 27, une première encoche 30 peut être réalisée entre la première partie intermédiaire 27 et la première extrémité libre 16. Une telle première encoche 30 permet la réalisation d'un élément séparateur 9 dont la surface de bord 22 est proche ou en contact avec celle de la paroi extérieure 11 de l'enveloppe de refroidissement 3 et la paroi intérieure 10 du boitier 2 sur laquelle est fixé l'élément séparateur 9.

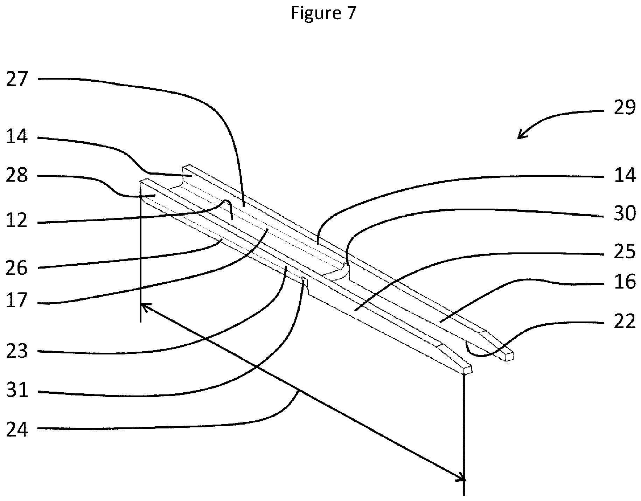

La figure 7 représente l'élément séparateur 9 du système de refroidissement selon un deuxième mode de réalisation.

Le deuxième mode de réalisation du système de refroidissement selon l'invention diffère du premier mode de réalisation par son élément séparateur 29. Cet élément séparateur est similaire à l'élément séparateur 9 du premier mode de réalisation mais il comprend en outre une deuxième partie de séparation 23, d'une troisième longueur 24, inclinée par rapport à la face partie de fixation 12 et non parallèle à la face partie de fixation 12. La première longueur 13 est inférieure à la troisième longueur 24 de manière à ce que la deuxième partie de séparation 23 comprend une deuxième extrémité libre 25 qui n'est pas directement liée à la partie de fixation 12

La partie de fixation 12 est donc plus courte que la deuxième partie de séparation 23. La deuxième partie de séparation 23 comprend en outre une deuxième partie intermédiaire 28 qui est directement liée à la partie de fixation 12. La deuxième extrémité libre 25 est directement liée à la deuxième partie intermédiaire 28. La deuxième partie intermédiaire 28 assure donc la liaison entre la partie de fixation 12 et la deuxième extrémité libre 25.

La deuxième partie de séparation 23 est par exemple formée en continuité de matière avec la partie de fixation 12 au-delà d'une deuxième zone de pliage 26. La deuxième zone de pliage 26 assure donc la liaison directe entre la partie de fixation 12 et la deuxième partie intermédiaire 28 de la deuxième partie de séparation 23.

La deuxième partie de séparation 23, peut former un angle compris entre 20 degrés et 160 degrés, notamment entre 45 degrés et 135 degrés, avec la partie de fixation 12. L'élément séparateur 29 du deuxième mode de réalisation de l'invention présente une deuxième partie de séparation 23 qui forme un angle de 90 degrés avec la partie de fixation 12.

Comme pour la première partie de séparation 14, une deuxième encoche 31 peut être réalisée entre la deuxième partie intermédiaire 28 et la deuxième extrémité libre 25 de la deuxième partie de séparation 23.

Dans les deux modes de réalisation de l'invention représentés sur les figures, la ou les parties de séparation 14, 23 sont planes. Dans d'autres modes de réalisation de l'invention non représentés, le ou les parties de séparation 14, 23 ne sont pas planes.

Dans un autre mode de réalisation non représenté, la ou les parties de séparation peuvent présenter une ouverture ou une échancrure pour permettre un passage limité du fluide de refroidissement entre la zone d'entrée de la chambre de refroidissement et la zone de sortie de la chambre de refroidissement à travers l'élément séparateur.

## Revendications

1. Système de refroidissement pour machine électrique tournante (1) ayant un axe de rotation (A) comprenant :
a. une enveloppe de refroidissement (3) apte à recevoir un stator de la machine électrique tournante (1),
b. un boitier (2) recevant l'enveloppe de refroidissement,
dans lequel une paroi extérieure (11) de l'enveloppe de refroidissement (3) forme avec une paroi intérieure (10) du boitier une chambre de refroidissement (6) apte à être parcourue par un fluide de refroidissement,
et dans lequel le boitier comprend une ouverture d'entrée (4) pour l'entrée du fluide de refroidissement dans une zone d'entrée (7) de la chambre de refroidissement (6) et une ouverture de sortie (5) pour la sortie du fluide de refroidissement d'une zone de sortie (8) de la chambre de refroidissement (6), l'ouverture d'entrée (4) et l'ouverture de sortie (5) étant formées dans le boitier (2),
et dans lequel un élément séparateur (9, 29), distinct de l'enveloppe de refroidissement (3) et du boitier (2), est fixé sur l'une des paroi extérieure (11) de l'enveloppe de refroidissement (3) et paroi intérieure (10) du boitier (2) pour séparer la zone d'entrée (7) de la chambre de refroidissement (6) et la zone de sortie (8) de la chambre de refroidissement (6),
**caractérisé en ce que** l'élément séparateur (9, 29) comprend:
a. une partie de fixation (12), d'une première longueur (13), comportant une face de fixation d'une forme complémentaire à la forme de celle des paroi extérieure (11) de l'enveloppe de refroidissement (3) et paroi intérieure (10) du boitier (2) sur laquelle l'élément séparateur (9, 29) est fixé,
b. une première partie de séparation (14), d'une deuxième longueur (15), inclinée par rapport à la partie de fixation (12) et non parallèle à la partie de fixation (12),
la première longueur (13) étant inférieure à la deuxième longueur (15) de manière à ce que la première partie de séparation (14) comprend une première extrémité libre (16) qui n'est pas directement liée à la partie de fixation (12).

2. Système de refroidissement selon la revendication précédente dans lequel la première partie de séparation (14) forme un angle compris entre 20 degrés et 160 degrés, notamment entre 45 degrés et 135 degrés, avec la partie de fixation (12).

3. Système de refroidissement selon l'une des revendications précédentes dans lequel la première partie de séparation (14) est formée en continuité de matière avec la partie de fixation (12) au-delà d'une première zone de pliage (17).

4. Système de refroidissement selon l'une des revendications précédentes dans lequel la chambre de refroidissement (6) présente une forme de révolution ayant pour axe l'axe de rotation (A), la forme de révolution ayant une première épaisseur (18) mesurée à une première extrémité axiale (20) et une deuxième épaisseur (19) mesurée à une deuxième extrémité axiale (21), la première épaisseur (18) étant inférieure à la deuxième épaisseur (19),
et dans lequel la première extrémité libre (16) est orientée du côté de la première extrémité axiale (20), une autre extrémité (22) de la première partie de séparation (14) opposée à l'extrémité libre (16) étant orienté du côté de la deuxième extrémité axiale (21).

5. Système de refroidissement selon la revendication précédente dans lequel l'élément séparateur (9, 29) est réalisé à partir d'un matériau en feuille notamment en tôle d'acier.

6. Système de refroidissement selon la revendications 5 dans lequel une surface de bord (22) du matériau en feuille de la première extrémité libre (16) fait face à l'une parmi : la paroi extérieure (11) de l'enveloppe de refroidissement (3) et la paroi intérieure (10) du boitier (2) sur laquelle est fixé l'élément séparateur (9, 29).

7. Système de refroidissement selon l'une des revendications précédentes dans lequel l'élément séparateur (29) comprend une deuxième partie de séparation (23), d'une troisième longueur (24), inclinée par rapport à la partie de fixation (12) et non parallèle à la partie de fixation (12), la première longueur (13) étant inférieure à la troisième longueur (24) de manière à ce que la deuxième partie de séparation (23) comprend une deuxième extrémité libre (25) qui n'est pas directement liée à la partie de fixation (12).

8. Système de refroidissement selon la revendication précédente dans lequel la deuxième partie de séparation (23) est formée en continuité de matière avec la partie de fixation (12) au-delà d'une deuxième zone de pliage (26).

9. Système de refroidissement selon l'une de revendication précédente dans lequel l'élément séparateur (9, 29) est soudé sur l'une des paroi extérieure (11) de l'enveloppe de refroidissement (3) et paroi intérieure (10) du boitier (2).

10. Machine électrique comprenant :
a. un stator,
b. un rotor,
c. un système de refroidissement selon l'une des revendications précédentes.

11. Machine électrique selon la revendication précédente dans laquelle le stator est monté en force dans l'enveloppe de refroidissement (3).

## Patentansprüche

1. Kühlsystem für drehende elektrische Maschine (1) mit einer Drehachse (A) umfassend:
a. einen Kühlmantel (3), der geeignet ist, einen Stator der drehenden elektrischen Maschine (1) aufzunehmen,
b. ein Gehäuse (2), das den Kühlmantel aufnimmt, wobei eine Außenwand (11) des Kühlmantels (3) mit einer Innenwand (10) des Gehäuses eine Kühlkammer (6) bildet, die geeignet ist, von einem Kühlfluid durchströmt zu werden,
und wobei das Gehäuse eine Eintrittsöffnung (4) für den Eintritt des Kühlfluids in einen Eintrittsbereich (7) der Kühlkammer (6) und eine Austrittsöffnung (5) für den Austritt des Kühlfluids aus einem Austrittsbereich (8) der Kühlkammer (6) umfasst, wobei die Eintrittsöffnung (4) und die Austrittsöffnung (5) im Gehäuse (2) ausgebildet sind,
und wobei ein Trennelement (9, 29), das vom Kühlmantel (3) und vom Gehäuse (2) gesondert ist, auf einer von der Außenwand (11) des Kühlmantels (3) und der Innenwand (10) des Gehäuses (2) befestigt ist, um den Eintrittsbereich (7) der Kühlkammer (6) und den Austrittsbereich (8) der Kühlkammer (6) zu trennen,
**dadurch gekennzeichnet, dass** das Trennelement (9, 29) Folgendes umfasst:
a. einen Befestigungsabschnitt (12) einer ersten Länge (13), der eine Befestigungsseite mit einer Form aufweist, die zur Form jener der Außenwand (11) des Kühlmantels (3) und der Innenwand (10) des Gehäuses (2), auf welcher das Trennelement (9, 29) befestigt ist, komplementär ist,
b. einen ersten Trennabschnitt (14) einer zweiten Länge (15), der bezogen auf den Befestigungsabschnitt (12) geneigt ist und nicht parallel zum Befestigungsabschnitt (12) verläuft,
wobei die erste Länge (13) kleiner als die zweite Länge (15) ist, so dass der erste Trennabschnitt (14) ein erstes freies Ende (16) umfasst, das nicht direkt mit dem Befestigungsabschnitt (12) verbunden ist.

2. Kühlsystem nach dem vorhergehenden Anspruch, wobei der erste Trennabschnitt (14) einen Winkel zwischen 20 Grad und 160 Grad, insbesondere zwischen 45 Grad und 135 Grad mit dem Befestigungsabschnitt (12) bildet.

3. Kühlsystem nach einem der vorhergehenden Ansprüche, wobei der erste Trennabschnitt (14) materialschlüssig mit dem Befestigungsabschnitt (12) über einen ersten Faltbereich (17) hinaus ausgebildet ist.

4. Kühlsystem nach einem der vorhergehenden Ansprüche, wobei die Kühlkammer (6) eine Rotationsform mit der Drehachse (A) als Achse aufweist, wobei die Rotationsform eine erste Dicke (18), die an einem ersten Axialende (20) gemessen wird, und eine zweite Dicke (19), die an einem zweiten Axialende (21) gemessen wird, aufweist, wobei die erste Dicke (18) kleiner als die zweite Dicke (19) ist, und wobei das erste freie Ende (16) zur Seite des ersten Axialendes (20) orientiert ist, wobei ein anderes Ende (22) des ersten Trennabschnitts (14) gegenüber dem freien Ende (16) zur Seite des zweiten Axialendes (21) orientiert ist.

5. Kühlsystem nach dem vorhergehenden Anspruch, wobei das Trennelement (9, 29) aus einem Blattmaterial, insbesondere aus Stahlblech hergestellt ist.

6. Kühlsystem nach Anspruch 5, wobei eine Randfläche (22) des Blattmaterials des ersten freien Endes (16) einem von Folgendem zugewandt ist: der Außenwand (11) des Kühlmantels (3) und der Innenwand (10) des Gehäuses (2), auf der das Trennelement (9, 29) befestigt ist.

7. Kühlsystem nach einem der vorhergehenden Ansprüche, wobei das Trennelement (29) einen zweiten Trennabschnitt (23) einer dritten Länge (24) umfasst, der bezogen auf den Befestigungsabschnitt (12) geneigt ist und nicht parallel zum Befestigungsabschnitt (12) verläuft, wobei die erste Länge (13) kleiner als die dritte Länge (24) ist, so dass der zweite Trennabschnitt (23) ein zweites freies Ende (25) umfasst, das nicht direkt mit dem Befestigungsabschnitt (12) verbunden ist.

8. Kühlsystem nach dem vorhergehenden Anspruch, wobei der zweite Trennabschnitt (23) materialschlüssig mit dem Befestigungsabschnitt (12) über einen zweiten Faltbereich (26) hinaus ausgebildet ist.

9. Kühlsystem nach einem der vorhergehenden Ansprüche, wobei das Trennelement (9, 29) an eine von der Außenwand (11) des Kühlmantels (3) und der Innenwand (10) des Gehäuses (2) geschweißt ist.

10. Elektrische Maschine umfassend:
a. einen Stator,
b. einen Rotor,
c. ein Kühlsystem nach einem der vorhergehenden Ansprüche.

11. Elektrische Maschine nach dem vorhergehenden Anspruch, wobei der Stator in den Kühlmantel (3) eingepresst ist.

## Claims

1. Cooling system for a rotary electric machine (1) having an axis of rotation (A), comprising:
a. a cooling jacket (3) that is able to receive a stator of the rotary electric machine (1),
b. a housing (2) receiving the cooling jacket,
wherein an outer wall (11) of the cooling jacket (3) forms, together with an inner wall (10) of the housing, a cooling chamber (6) that is able to be passed through by a cooling fluid,
and wherein the housing comprises an inlet opening (4) for the inlet of the cooling fluid into an inlet zone (7) of the cooling chamber (6), and an outlet opening (5) for the outlet of the cooling fluid from an outlet zone (8) of the cooling chamber (6), the inlet opening (4) and the outlet opening (5) being formed in the housing (2),
and wherein a separating element (9, 29), which is separate from the cooling jacket (3) and from the housing (2), is fixed to one of the outer wall (11) of the cooling jacket (3) and the inner wall (10) of the housing (2) in order to separate the inlet zone (7) of the cooling chamber (6) and the outlet zone (8) of the cooling chamber (6),
**characterized in that** the separating element (9, 29) comprises:
a. a fixing part (12), with a first length (13), having a fixing face with a shape that is complementary to the shape of the one of the outer wall (11) of the cooling jacket (3) and the inner wall (10) of the housing (2) to which the separating element (9, 29) is fixed,
b. a first separation part (14), with a second length (15), that is inclined with respect to the fixing part (12) and not parallel to the fixing part (12),
the first length (13) being smaller than the second length (15) such that the first separation part (14) comprises a first free end (16) which is not directly connected to the fixing part (12).

2. Cooling system according to the preceding claim, wherein the first separation part (14) forms an angle of between 20 degrees and 160 degrees, in particular between 45 degrees and 135 degrees, with the fixing part (12).

3. Cooling system according to either of the preceding claims, wherein the first separation part (14) is formed in continuity of material with the fixing part (12) beyond a first bending zone (17).

4. Cooling system according to one of the preceding claims, wherein the cooling chamber (6) has a shape exhibiting symmetry of revolution whose axis is the axis of rotation (A), the shape exhibiting symmetry of revolution having a first thickness (18) measured at a first axial end (20) and a second thickness (19) measured at a second axial end (21), the first thickness (18) being smaller than the second thickness (19),
and wherein the first free end (16) is oriented toward the first axial end (20), another end (22) of the first separation part (14) that is opposite to the free end (16) being oriented toward the second axial end (21).

5. Cooling system according to the preceding claim, wherein the separating element (9, 29) is made from a sheet material, in particular of sheet steel.

6. Cooling system according to Claim 5, wherein an edge surface (22) of the sheet material of the first free end (16) faces toward the one of the outer wall (11) of the cooling jacket (3) and the inner wall (10) of the housing (2) to which the separating element (9, 29) is fixed.

7. Cooling system according to one of the preceding claims, wherein the separating element (29) comprises a second separation part (23), with a third length (24), that is inclined with respect to the fixing part (12) and not parallel to the fixing part (12), the first length (13) being smaller than the third length (24) such that the second separation part (23) comprises a second free end (25) that is not directly connected to the fixing part (12).

8. Cooling system according to the preceding claim, wherein the second separation part (23) is formed in continuity of material with the fixing part (12) beyond a second bending zone (26).

9. Cooling system according to one of the preceding claims, wherein the separating element (9, 29) is welded to one of the outer wall (11) of the cooling jacket (3) and the inner wall (10) of the housing (2).

10. Electric machine comprising:
a. a stator,
b. a rotor,
c. a cooling system according to one of the preceding claims.

11. Electric machine according to the preceding claim, wherein the stator is mounted by force in the cooling jacket (3).
